# EUROPÄISCHE PATENTSCHRIFT

(11) **EP 2 403 736 B1**
(45) Veröffentlichungstag und Bekanntmachung des Hinweises auf die Patenterteilung: **12.06.2013**
(21) Anmeldenummer: 10711863.0
(22) Anmeldetag: 02.03.2010
(51) Int. Cl.: B60K 1/04, B60L 11/18, H02J 7/00

(54) **VORRICHTUNG ZUR ABSTÜTZUNG EINER LADESTECKDOSE FÜR EIN FAHRZEUG MIT ELEKTRISCHEM ANTRIEB**
DEVICE FOR SUPPORT OF A CHARGING SOCKET IN A CAR WITH ELECTRIC DRIVE
DISPOSITIF POUR SUPPORTER UN SOUCLE DE CHARGEMENT POUR UNE VOITURE AVEC ENTRAÎNEMENT ELECTRIC

(30) Priorität: 02.03.2009 EP 09154161
(43) Veröffentlichungstag der Anmeldung: 11.01.2012
(73) Patentinhaber: Magna E-Car Systems GmbH & Co OG, 8041 Graz (AT)
(72) Erfinder: UNTERBERGER, Rainer, A-8041 Graz (AT)
(74) Vertreter: Rausch, Gabriele
(86) Internationale Anmeldenummer: PCT/EP2010/052641
(87) Internationale Veröffentlichungsnummer: WO 2010/100164

(56) Entgegenhaltungen:
- DE-A1- 4 446 406
- DE-A1-102004 014 073
- DE-A1-102007 002 025
- DE-B4- 19 681 384
- JP-A- 9 109 691

## Beschreibung

Die Erfindung betrifft ein Fahrzeug mit den Merkmalen des Oberbegriffs des Patentanspruchs 1.

Die DE 10 2004 014073 A1 offenbart ein Fahrzeug, das eine Schlossstütze aufweist, die ein Haubenschloss für eine Fronthaube an der Fahrzeugstruktur abstützt. Das Haubenschloss fixiert und verriegelt die Fronthaube in einer geschlossenen Position.

Aus dem Stand der Technik sind verschiedene Losungen zur Anordnung einer Ladesteckdose an einem Elektro- oder Hybridfahrzeug bekannt.

Aus der DE 10 2007 002 025 A1 ist beispielsweise bekannt, eine Ladesteckdose anstelle eines Tankeinfüllstutzens vorzusehen. In der DE 196 81 384 B4 ist eine Ladesteckdose beschrieben, die in einem Fahrzeug an der Stoßstange, dem Kühlergrill oder einer Körperplatte angebracht werden kann.

Es ist eine der Aufgaben der vorliegenden Erfindung ein Fahrzeug bereitzustellen, bei dem eine Ladeeinrichtung besonders kosteneffizient und technisch vorteilhaft angeordnet ist.

Diese Aufgabe wird durch ein Fahrzeug mit den Merkmalen des Patentanspruchs 1 gelöst.

Dadurch, dass die Schlossstütze zur Abstützung der Ladeeinrichtung eingerichtet wird, ist eine besonders ergonomische Anordnung der Ladeinrichtung möglich. Ferner ergibt sich somit die Möglichkeit eine starre und steife Konsole zur Aufnahme der Ladeeinrichtung am Fahrzeug zu gestalten, ohne zusätzliche verstärkende Schweißungen am Fahrzeugrohbau durchführen zu müssen. Damit ergibt sich ein Gewichts- und Kostenvorteil.

Nach einer besonderen Ausführungsform der erfindungsgemäßen Vorrichtung weist die Ladeeinrichtung eine Konsole auf, die vorzugsweise zumindest teilweise an der Schlossstütze befestigt ist und an der Fahrzeugstruktur abgestützt wird.

Durch die Schlossstütze kann eine technisch einfache und sehr wirkungsvolle steife Abstutzung der Ladeeinrichtung verwirklicht werden.

Nach einer besonderen Ausführungsform der erfindungsgemäßen Vorrichtung weist die Ladeeinrichtung eine Ladesteckdose auf, über welche durch Einführen eines externen Ladesteckers der im Fahrzeug vorgesehene elektrische Energiespeicher geladen werden kann.

Nach einer besonderen Ausführungsform der erfindungsgemäßen Vorrichtung weist die Ladesteckdose einen Ladeverriegelungsmechanismus zur Fixierung des Ladesteckers auf, wodurch die Ladestecker bei Ladung in der Ladesteckdose verriegelt werden kann.

Durch den Ladeverriegelungsmechanismus kann verhindert werden, dass während eines Ladevorganges das Laden beispielsweise durch unbeabsichtigtes Trennen der Ladeeinrichtung von deren externem Gegenstück unterbrochen wird.

Nach einer anderen möglichen Ausführungsform der erfindungsgemäßen Vorrichtung weist die Ladeeinrichtung einen Ladestecker auf, der mit einer externen Ladesteckdose verbunden werden kann.

Nach einer besonderen Ausführungsform der erfindungsgemäßen Vorrichtung ist die Schlossstütze in Form eines Stützblechs ausgeführt und das Stützblech an einem Querträger der Fahrzeugstruktur abgestützt wird. Nach verschiedenen Ausführungsformen der Erfindung verlaufen im Bereich des Stützbleches verschiedene Querträger. Durch Befestigung des Stützbleches an einem oder mehreren dieser Querträger ist eine Verbindung des Stützbleches und damit der Ladeeinrichtung mit einer tragenden Struktur des Fahrzeuges möglich.

Nach einer besonderen Ausführungsform der erfindungsgemäßen Vorrichtung weist das Fahrzeug einen Vorder- und einen Hinterwagen auf, und ist die Schlossstütze an einem Teil des Vorderwagens oder des Hinterwagens befestigt.

Nach einer besonderen Ausführungsform der erfindungsgemäßen Vorrichtung ist die bewegliche Klappe als Frontklappe ausgeführt. Durch diese besondere Ausgestaltung ist ein besonders ergonomischer Zugang zur Ladeeinrichtung möglich. Auf einfache Weise kann damit auf öffentlichen und/oder privaten Parkplätzen die Ladeeinrichtung mit einem geeigneten externen Gegenstück zur Aufladung des Energiespeichers des Fahrzeuges verbunden werden. Nach einer weiteren möglichen Ausführungsform der erfindungsgemäßen Vorrichtung, ist die bewegliche Klappe als Heckklappe ausgeführt.

Nach einer besonderen Ausführungsform der erfindungsgemäßen Vorrichtung ist vor der Ladeeinrichtung eine bewegliche Abdeckung vorgesehen. Nach einer besonderen Ausführungsform weist die bewegliche Abdeckung einen Öffnungs- und Verriegelungsmechanismus auf, der ein Öffnen sowie ein, vorzugsweise von der Klappe unabhängiges, Entriegeln und Verriegeln der Abdeckung ermöglicht.

Nach einer besonderen Ausführungsform der erfindungsgemäßen Vorrichtung ist der öffnungs- und Verriegelungsmechanismus über ein am Fahrzeug angeordnetes und von außerhalb des Fahrzeugs betätigbares Betätigungselement, insbesondere einen beweglichen Logoträger, des Fahrzeuges aktivierbar.

Nach einer besonderen Ausführungsform der erfindungsgemäßen Vorrichtung ist der Öffnungs- und Verriegelungsmechanismus über ein in der Fahrgastzelle angeordnetes Betätigungssystem betätigbar.

Nach einer besonderen Ausführungsform der erfindungsgemäßen Vorrichtung ist die Abdeckung im Bereich des vorderen oder hinteren Stossfängers angeordnet.

Nach einer besonderen Ausführungsform der erfindungsgemäßen Vorrichtung ist die Abdeckung als Teil der Klappe ausgeführt.

Nach einer besonderen Ausführungsform der erfindungsgemäßen Vorrichtung weist das Fahrzeug eine elektrische Antriebseinheit mit zumindest einem E-Motor zum Antrieb zumindest einer Achse und/oder eines Rades des Fahrzeuges auf.

Der Gegenstand der vorliegenden Erfindung ist nachfolgend anhand einer beispielhaften und nicht einschränkenden Ausführung durch mehrere schematische Figuren näher erläutert. Es zeigen:
Fig. 1 eine Ansicht der Fahrzeugstruktur mit Anbauteilen in einer Explosionsansicht
Fig. 2 eine Detailansicht aus Fig. 1 in einer perspektivischen Ansicht
Fig. 3 eine weitere Detailansicht aus Fig.1 mit der erfindungsgemäßen Ladeeinrichtung in einer perspektivischen Ansicht
Fig. 4 eine Detailansicht aus Fig. 3, teilweise als Schnitt in perspektivischer Ansicht
Fig. 5 eine weitere Ausführungsform der erfindungsgemäßen Vorrichtung in perspektivischer Ansicht

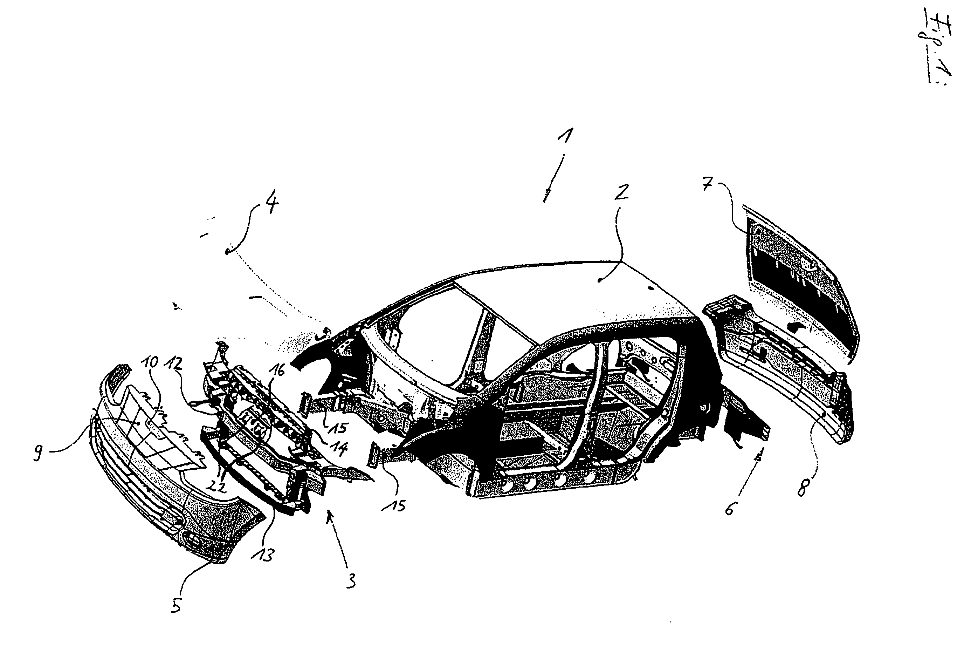

In Fig. 1 ist eine mögliche Ausgestaltung eines erfindungsgemäßen Fahrzeuges dargestellt, wobei der Übersichtlichkeit wegen nur einige ausgewählte und für die Veranschaulichung des Erfindungsgegenstandes wesentliche Teile der Fahrzeugstruktur und einige Anbauteile dargestellt sind. Aus Fig. 1 sind eine Fahrgastzelle 2, ein Vorderwagen 3, eine Frontklappe bzw. Motorhaube 4, ein vorderer Stoßfänger 5, ein Hinterwagen 6, eine Heckklappe 7 und ein hinterer Stoßfänger 8 ersichtlich.

Bei dem dargestellten Fahrzeug handelt es sich um einen 4- oder 5 sitzigen Personenkraftwagen. Die Erfindung eignet sich jedoch darüber hinaus auch für andere Fahrzeuge, insbesondere andere Personen- oder Lastkraftfahrzeuge.

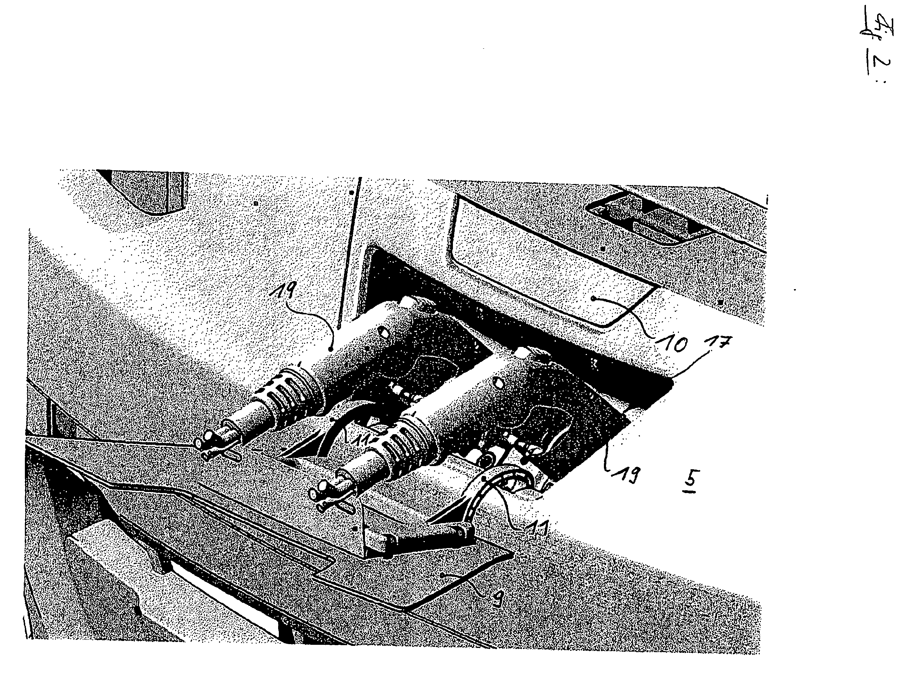

Wie aus Fig. 1 und Fig. 2 ersichtlich weist der vordere Stoßfänger 5 eine bewegliche Abdeckung 9 auf. Diese Abdeckung ist zentral am vorderen Stoßfänger angeordnet und kann durch Betätigung, insbesondere Drücken, eines vorgesehenen Betätigungselementes 10, insbesondere eines vorgesehenen beweglichen Logoträgers, geöffnet und/oder entriegelt werden. Wie in Fig. 2 ersichtlich klappt die bewegliche Abdeckung, beispielsweise durch geeignete Drehscharniere 11 geführt, nach vorne und ermöglicht somit einen Zugang zu den hinter der Abdeckung 9 vorgesehen Bauelementen.

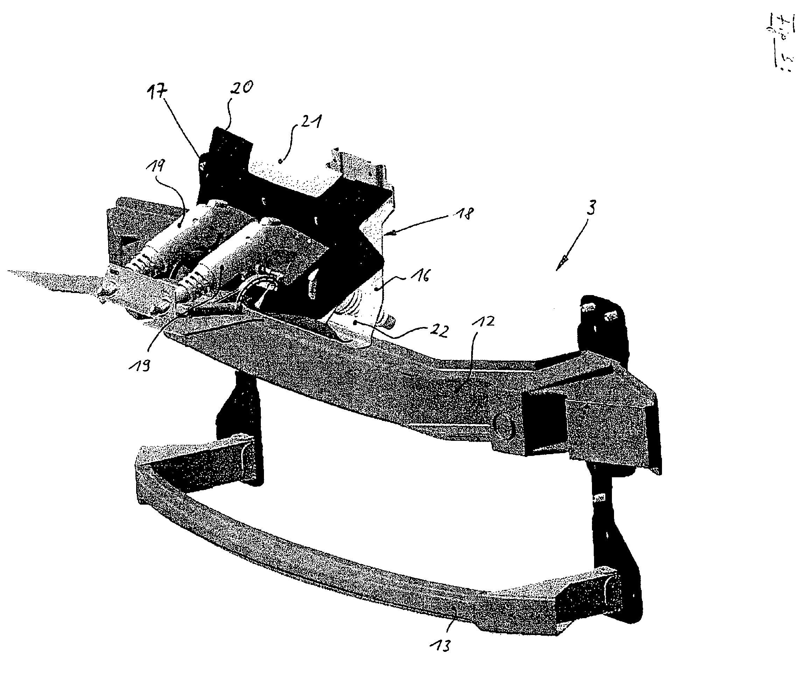

Wie aus Fig. 1 und Fig. 3 ersichtlich weist der Vorderwagen 3 verschiedene Querträger auf, wobei ein erster und ein zweiter Biegeträger 12, 13 insbesondere zur Unterstützung des vorderen Stoßfängers 5 sowie ein Montageträger 14 vorgesehen ist.

Der Vorderwagen 3 ist geeignet, beispielsweise über entsprechende Längsträger 15, an der Fahrgastzelle 2 bzw. deren tragender Struktur befestigt.

An dem ersten Biegeträger 12 ist eine Schlossstütze 16 befestigt. Schlossstützen sind aus dem Stand der Technik, beispielsweise aus der DE 10 2004 014 073 B4 bekannt und dienen zur Abstützung und/oder Befestigung eines Schlosses, insbesondere eines Klappenschlosses, beispielweise eines Frontklappenschlosses, an der Struktur des Fahrzeuges. Die Schlossstütze kann entsprechend verschiedener Ausführungsformen auf unterschiedliche Weise an dem Vorderwagen oder einer anderen Fahrzeugstruktur befestigt werden. In der vorliegenden Ausführungsform ist die Schlossstütze 16 über eine Verschraubung, Vernieten oder ein geeignetes thermisches Verfahren, beispielsweise durch Schweißen, an dem Vorderwagen befestigt und bietet eine entsprechend steife Stützung für eine Ladeeinrichtung 17, die sich über die Schlossstütze 16 an der Fahrzeugstruktur abstützt.

Die Ladeeinrichtung 17 weist im dargestellten Ausführungsbeispiel eine entsprechende Ladesteckdose 18 für zwei Ladestecker 19 auf. Die Ladesteckdose 18 ist in eine Konsole 20 integriert, wobei die Ladesteckdose 18 einen nicht im Detail dargestellten Ladeverriegelungsmechanismus aufweist durch welchen die Ladestecker geeignet fixiert werden können. In Fig. 3 ist ein Entriegelungsschalter 21 dargestellt über welchen im Zusammenwirken mit einem in der Konsole 20 und/oder der Ladesteckdose 18 integrierten Mechanismus die Ladestecker entriegelt und damit von der Ladesteckdose 18 freigegeben werden. Während des Ladevorgangs und aktivierter Verriegelung kann der Ladestecker somit nicht (zerstörungsfrei) aus der Ladesteckdose entnommen werden.

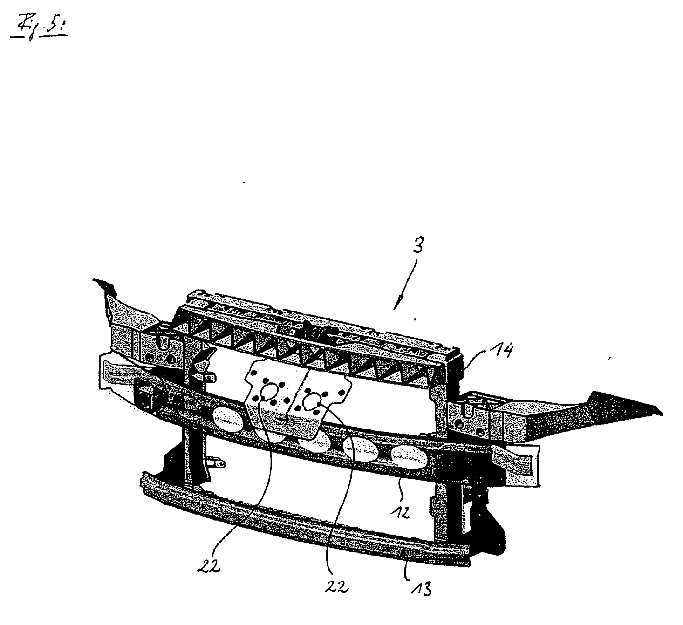

In Fig. 5 ist eine gegenüber den vorhergehenden Figuren leicht abgeänderte Ausgestaltung der Befestigung der Schlossstütze 16 schematisch dargestellt. Die Schlossstütze 16 stützt sich dabei auf den ersten Biegeträger 12 und den Montageträger 14 ab.

Die Schlossstütze 16 weist Öffnungen 22 auf, durch welche geeignete Leitungen 23 geführt werden, welche die Ladeeinrichtung mit einem am Fahrzeug angeordneten elektrischen Energiespeicher (nicht näher dargestellt) verbinden.

Das Fahrzeug 1 ist nach einer besonderen Ausführungsform als Elektro-Fahrzeug oder als Hybrid-Fahrzeug ausgeführt.

In dem dargestellten Ausführungsbeispiel ist die Ladeeinrichtung 17 an der Schlossstütze der Frontklappe 4 angeordnet. Nach einer anderen möglichen Ausführungsform ist die Ladeeinrichtung 17 an der Schlossstütze der Heckklappe angeordnet.

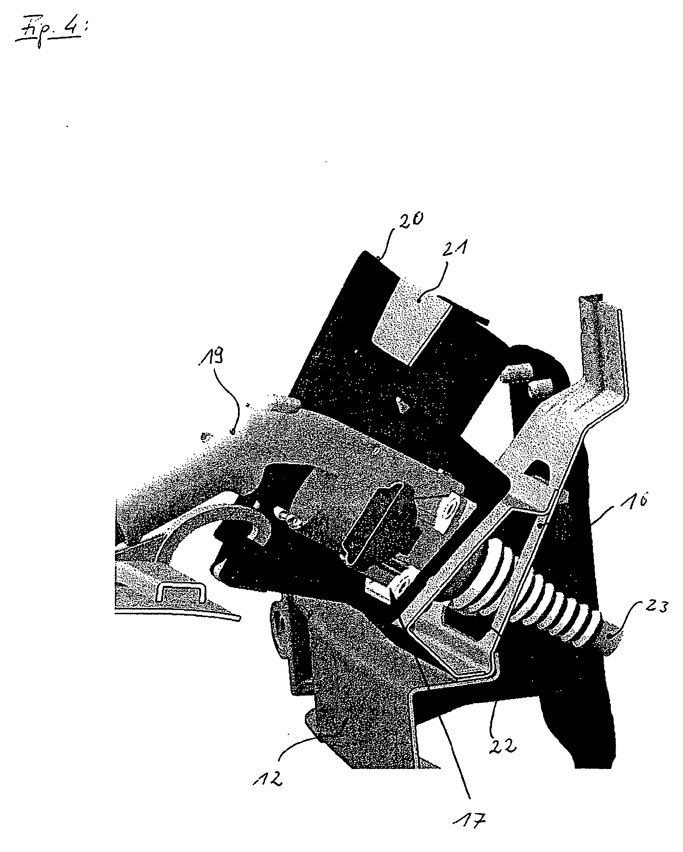

Wie in Fig. 4 ersichtlich ist die Konsole (20) deformierbar ausgelegt, um den Anforderungen des Fußgängerschutzes zu genügen. Dabei ist es wichtig, die Ladesteckdose mit entsprechendem Abstand zu der in Fig.1 dargestellten beweglichen Abdeckung (9)im Fahrzeug zu integrieren um den benötigen Deformationsweg der Konsole bzw. Aufnahme Ladesteckdose (20) sicherzustellen. Dies wird durch entsprechende Ausbildung der Schlossstütze gewährleistet.

## Patentansprüche

1. Fahrzeug mit einer beweglichen Klappe (4) an der Vorder- oder Rückseite des Fahrzeuges und einem an der Fahrzeugstruktur angeordneten Klappenschloss zur Fixierung und Verriegelung der Klappe (4) in einer geschlossenen Position, wobei die bewegliche Klappe (4) als Frontklappe oder Heckklappe ausgeführt ist, wobei das Klappenschloss eine Schlossstütze (16) aufweist, durch welche das Klappenschloss an der Fahrzeugstruktur abgestützt wird, **dadurch gekennzeichnet, dass** das Fahrzeug eine Ladeeinrichtung (17) zur Aufladung eines elektrischen Energiespeichers aufweist, wobei die Schlossstütze (16) zur Abstützung der Ladeeinrichtung (17) eingerichtet ist.

2. Fahrzeug nach Anspruch 1, **dadurch gekennzeichnet, dass** die Ladeeinrichtung (17) eine zumindest teilweise an der Schlossstütze (16) befestigte Konsole (20) aufweist, die über die Schlossstütze (16) an der Fahrzeugstruktur abgestützt wird.

3. Fahrzeug nach Anspruch 1 oder 2, **dadurch gekennzeichnet, dass** die Ladeeinrichtung (17) eine Ladesteckdose (18) aufweist, über welche durch Einführen eines externen Ladesteckers der im Fahrzeug vorgesehene elektrische Energiespeicher geladen werden kann.

4. Fahrzeug nach Anspruch 3, **dadurch gekennzeichnet, dass** die Ladesteckdose (18) einen Ladeverriegelungsmechanismus zur Fixierung des Ladesteckers aufweist, wodurch die Ladestecker bei Ladung in der Ladesteckdose (18) verriegelt werden kann.

5. Fahrzeug nach einem der Ansprüche 1 bis 4, **dadurch gekennzeichnet, dass** die Schlossstütze (16) in Form eines Stützblechs ausgeführt ist und das Stützblech an einem Querträger der Fahrzeugstruktur abgestützt wird.

6. Fahrzeug nach einem der Ansprüche 1 bis 5, **dadurch gekennzeichnet, dass** das Fahrzeug einen Vorder- und einen Hinterwagen (3, 6) aufweist, und die Schlossstütze (16) über das Stützblech an einem Teil des Vorderwagens (3) oder des Hinterwagens (6) befestigt ist.

7. Fahrzeug nach einem der Ansprüche 1 bis 6, **dadurch gekennzeichnet, dass** vor der Ladeeinrichtung (17) eine bewegliche Abdeckung (9) vorgesehen ist und die bewegliche Abdeckung (9) einen Öffnungs- und Verriegelungsmechanismus aufweist, der ein Öffnen und ein, insbesondere von der Klappe unabhängiges, Entriegeln und Verriegeln der Abdeckung (9) ermöglicht.

8. Fahrzeug nach Anspruch 7, **dadurch gekennzeichnet, dass** der Öffnungs- und Verriegelungsmechanismus über ein am Fahrzeug angeordnetes und von außerhalb des Fahrzeugs betätigbares Betätigungselement (10) aktivierbar ist.

9. Fahrzeug nach Anspruch 7 oder 8, **dadurch gekennzeichnet, dass** der Öffnungs- und Verriegelungsmechanismus über ein in der Fahrgastzelle angeordnetes Betätigungssystem betätigbar ist.

10. Fahrzeug nach einem der Ansprüche 7 bis 9, **dadurch gekennzeichnet, dass** die Abdeckung (9) im Bereich des vorderen oder hinteren Stoßfängers (5, 8) angeordnet ist.

11. Fahrzeug nach einem der Ansprüche 7 bis 10, **dadurch gekennzeichnet, dass** die Abdeckung als Teil der Klappe ausgeführt ist.

12. Fahrzeug nach einem der Ansprüche 1 bis 8, **dadurch gekennzeichnet, dass** das Fahrzeug eine elektrische Antriebseinheit mit zumindest einem E-Motor zum Antrieb zumindest einer Achse und/oder eines Rades des Fahrzeuges aufweist.

## Claims

1. Vehicle having a movable hatch (4) on the front or rear side of the vehicle and having a hatch lock, which is arranged on the vehicle structure, for fixing and locking the hatch (4) in a closed position, wherein the movable hatch (4) is designed as a front hatch or rear hatch, wherein the hatch lock has a lock support (16) by way of which the hatch lock is supported on the vehicle structure, **characterized in that** the vehicle has a charging device (17) for charging an electrical energy storage means, wherein the lock support (16) is designed to support the charging device (17).

2. Vehicle according to Claim 1, **characterized in that** the charging device (17) has a bracket (20) which is at least partially attached to the lock support (16) and is supported on the vehicle structure by means of the lock support (16).

3. Vehicle according to Claim 1 or 2, **characterized in that** the charging device (17) has a charging socket (18) by means of which the electrical energy storage means which is provided in the vehicle can be charged by inserting an external charging plug.

4. Vehicle according to Claim 3, **characterized in that** the charging socket (18) has a charging locking mechanism for fixing the charging plug, as a result of which the charging plug can be locked in the charging socket (18) during charging.

5. Vehicle according to one of Claims 1 to 4, **characterized in that** the lock support (16) is designed in the form of a supporting plate and the supporting plate is supported on a crossmember of the vehicle structure.

6. Vehicle according to one of Claims 1 to 5, **characterized in that** the vehicle has a front end and a rear end (3, 6), and the lock support (16) is attached to a part of the front end (3) or the rear end (6) by means of the supporting plate.

7. Vehicle according to one of Claims 1 to 6, **characterized in that** a movable cover (9) is provided in front of the charging device (17), and the movable cover (9) has an opening and locking mechanism which allows the cover (9) to be opened and to be unlocked and locked, in particular independently of the hatch.

8. Vehicle according to Claim 7, **characterized in that** the opening and locking mechanism can be activated by means of an operating element (10) which is arranged on the vehicle and can be operated from outside the vehicle.

9. Vehicle according to Claim 7 or 8, **characterized in that** the opening and locking mechanism can be operated by means of an operating system which is arranged in the passenger compartment.

10. Vehicle according to one of Claims 7 to 9, **characterized in that** the cover (9) is arranged in the region of the front or rear bumper (5, 8).

11. Vehicle according to one of Claims 7 to 10, **characterized in that** the cover is designed as part of the hatch.

12. Vehicle according to one of Claims 1 to 8, **characterized in that** the vehicle has an electric drive unit having at least one electric motor for driving at least one axle and/or one wheel of the vehicle.

## Revendications

1. Véhicule comprenant un hayon mobile (4) du côté avant ou arrière du véhicule et une serrure de hayon, disposée sur la structure du véhicule, pour la fixation et le verrouillage du hayon (4) dans une position fermée, le hayon mobile (4) étant réalisé sous forme de hayon avant ou de hayon arrière, la serrure de hayon comprenant un support de serrure (16) au moyen duquel la serrure de hayon est supportée sur la structure du véhicule, **caractérisé en ce que** le véhicule comprend un dispositif de charge (17) pour la charge d'un accumulateur d'énergie électrique, le support de serrure (16) étant configuré pour le support du dispositif de charge (17).

2. Véhicule selon la revendication 1, **caractérisé en ce que** le dispositif de charge (17) comprend une console (20) fixée au moins partiellement au support de serrure (16), laquelle console est supportée sur la structure du véhicule par le biais du support de serrure (16).

3. Véhicule selon la revendication 1 ou 2, **caractérisé en ce que** le dispositif de charge (17) comprend une prise femelle de charge (18) par le biais de laquelle, par l'insertion d'une prise mâle de charge externe, l'accumulateur d'énergie électrique prévu dans le véhicule peut être chargé.

4. Véhicule selon la revendication 3, **caractérisé en ce que** la prise femelle de charge (18) comprend un mécanisme de verrouillage de charge pour la fixation de la prise mâle de charge, de sorte que la prise mâle de charge puisse être verrouillée dans la prise femelle de charge (18) lors de la charge.

5. Véhicule selon l'une quelconque des revendications 1 à 4, **caractérisé en ce que** le support de serrure (16) est réalisé sous la forme d'une tôle de support et la tôle de support est supportée sur une traverse de la structure du véhicule.

6. Véhicule selon l'une quelconque des revendications 1 à 5, **caractérisé en ce que** le véhicule comprend un partie avant et un partie arrière (3, 6), et le support de serrure (16) est fixé à une partie de la partie avant (3) ou de la partie arrière (6) par le biais de la tôle de support.

7. Véhicule selon l'une quelconque des revendications 1 à 6, **caractérisé en ce qu'**un couvercle mobile (9) est prévu devant le dispositif de charge (17) et le couvercle mobile (9) comprend un mécanisme d'ouverture et de verrouillage qui permet une ouverture ainsi qu'un déverrouillage et un verrouillage, en particulier indépendants du hayon, du couvercle (9).

8. Véhicule selon la revendication 7, **caractérisé en ce que** le mécanisme d'ouverture et de verrouillage peut être activé par le biais d'un élément d'actionnement (10) qui est disposé sur le véhicule et qui peut être actionné depuis l'extérieur du véhicule.

9. Véhicule selon la revendication 7 ou 8, **caractérisé en ce que** le mécanisme d'ouverture et de verrouillage peut être actionné par le biais d'un système d'actionnement disposé dans l'habitacle.

10. Véhicule selon l'une quelconque des revendications 7 à 9, **caractérisé en ce que** le couvercle (9) est disposé dans la région du pare-chocs avant ou arrière (5, 8).

11. Véhicule selon l'une quelconque des revendications 7 à 10, **caractérisé en ce que** le couvercle est réalisé en tant que partie du hayon.

12. Véhicule selon l'une quelconque des revendications 1 à 8, **caractérisé en ce que** le véhicule comprend une unité d'entraînement électrique dotée d'au moins un moteur électrique pour l'entraînement d'au moins un essieu et/ou une roue du véhicule.
